# EUROPÄISCHE PATENTSCHRIFT

(11) **EP 3 353 453 B1**
(45) Veröffentlichungstag und Bekanntmachung des Hinweises auf die Patenterteilung: **18.08.2021**
(21) Anmeldenummer: 16733883.9
(22) Anmeldetag: 29.06.2016
(51) Int. Cl.: F16H 63/32

(54) **FAHRZEUGGETRIEBE**
VEHICLE GEARBOX
BOÎTE DE VITESSES DE VÉHICULE AUTOMOBILE

(30) Priorität: 22.09.2015 DE 102015012348
(43) Veröffentlichungstag der Anmeldung: 01.08.2018
(73) Patentinhaber: Daimler AG, 70372 Stuttgart (DE)
(72) Erfinder: BENDER, Helmut, 74385 Pleidelsheim (DE)
(74) Vertreter: JENSEN & SON
(86) Internationale Anmeldenummer: PCT/EP2016/001105
(87) Internationale Veröffentlichungsnummer: WO 2017/050401

(56) Entgegenhaltungen:
- CN-A- 1 244 636
- DE-A1-102007 009 120
- DE-B- 1 122 385
- JP-A- S57 166 621
- JP-U- S57 220
- US-A- 5 027 672

## Beschreibung

Die Erfindung betrifft ein Fahrzeuggetriebe.

Aus der DE 11 22 385 B, der DE 10 2007 009 120 A1, der CN 1244636 A, der JP S57166621 A, der JP S57220 U sowie der gattungsgemäßen US 5 027 672 A sind bereits Schaltgabeln zu einer Betätigung einer Schaltmuffe in einem Fahrzeuggetriebe, mit einem Gabelbogen, der die Schaltmuffe in einem montierten Zustand zumindest teilweise umgreift, bekannt. Alle genannten Dokumente zeigen dabei Schaltgabeln mit jeweils einem Gabelbogen, der zumindest bereichsweise eine axiale Stufung aufweist.

Der Erfindung liegt insbesondere die Aufgabe zugrunde, einen vorhandenen Bauraum besonders vorteilhaft zu nutzen. Sie wird durch eine erfindungsgemäße Ausgestaltung entsprechend dem Anspruch 1 gelöst. Weiterbildungen der Erfindung ergeben sich aus den abhängigen Ansprüchen.

Die Erfindung geht aus von einem Fahrzeuggetriebe mit einem ersten Zahnrad, einem weiteren Zahnrad, einer Schaltmuffe und einer Schaltgabel zu einer Betätigung der Schaltmuffe, mit einem Gabelbogen, der die Schaltmuffe zumindest teilweise umgreift. Dabei weist der Gabelbogen in zumindest einem Bereich eine, bezogen auf eine Richtung einer Drehachse der Schaltmuffe, die mit einer Achse des Gabelbogens zusammenfällt, axiale Stufung auf,
wobei der Gabelbogen einen ersten Abschnitt und einen weiteren Abschnitt aufweist, die radial zueinander benachbart und, bezogen auf die Richtung der Drehachse der Schaltmuffe, axial versetzt zueinander angeordnet sind,
wobei der erste Abschnitt bezogen auf die Drehachse der Schaltmuffe radial unterhalb der Stufung angeordnet ist, wobei der weitere Abschnitt radial oberhalb der Stufung angeordnet ist,
wobei die Stufung einen Übergang zwischen dem ersten Abschnitt und dem weiteren Abschnitt bildet und radial zwischen den beiden Abschnitten angeordnet ist,
wobei der erste Abschnitt zumindest teilweise in eine Nut der Schaltmuffe (12a) eingreift, wobei die Nut zwei einander axial gegenüberliegende Seitenwände aufweist,
wobei die Schaltgabel dazu vorgesehen ist, die Schaltmuffe entlang eines Schaltwegs in einer Verschieberichtung, die parallel zur Drehachse der Schaltmuffe angeordnet ist, zu bewegen.

Es wird erfindungsgemäß vorgeschlagen, dass die Schaltmuffe in einem ersten Schaltzustand in Eingriff mit dem ersten Zahnrad und in einem weiteren Schaltzustand in Eingriff mit dem weiteren Zahnrad ist, wobei die Schaltgabel und die Schaltmuffe in dem weiteren Schaltzustand eine Position aufweisen, die axial versetzt, bezogen auf die Richtung der Drehachse der Schaltmuffe, zu einer Position in dem ersten Schaltzustand angeordnet ist,
wobei das erste Zahnrad an einem Außenumfang einen Ring aufweist, der in dem ersten Schaltzustand axial, bezogen auf die Richtung der Drehachse der Schaltmuffe, mit der Schaltmuffe überlappt,
wobei in dem ersten Schaltzustand sowohl die Schaltmuffe axial teilweise in das erste Zahnrad eingreift als auch der erste Abschnitt des Gabelbogens teilweise in das Zahnrad eingreift,
wobei der zweite Abschnitt des Gabelbogens in axialer Richtung mit einer der beiden Seitenwände der Nut der Schaltmuffe überlappt, sodass die besagte Seitenwand der Nut in axialer Richtung in den Gabelbogen eingreift. Dadurch kann ein vorhandener Bauraum besonders vorteilhaft genutzt werden. Es kann eine besonders kompakte Schaltgabel bereitgestellt werden. Es kann eine besonders belastbare Schaltgabel bereitgestellt werden.

Unter einer "Schaltgabel" soll in diesem Zusammenhang insbesondere eine Vorrichtung verstanden werden, die dazu vorgesehen ist, eine zumindest im Wesentlichen translatorische Schaltbewegung in einer Verschieberichtung auf die Schaltmuffe zu übertragen. Insbesondere weist die Schaltgabel zumindest ein Führungselement auf, das dazu vorgesehen ist, die Schaltgabel in der Verschieberichtung zu führen, beispielsweise ein Führungsrohr, einen Führungsring, eine Führungsleiste, eine Führungsnut und/oder ein anderes dem Fachmann geeignet erscheinendes Element. Insbesondere weist die Schaltmuffe eine Drehachse auf, die zumindest im Wesentlichen parallel zu der Verschieberichtung angeordnet ist. Unter einem "Gabelbogen" soll in diesem Fall insbesondere ein Element verstanden werden, das zumindest zwei Gabelenden ausbildet, die dazu vorgesehen sind, in einem montierten Zustand zumindest teilweise in die Schaltmuffe einzugreifen. Vorzugsweise ist der Gabelbogen scheibenförmig ausgebildet. Bevorzugt ist der Gabelbogen zumindest im Wesentlichen in Form eines Kreisringabschnitts ausgebildet. Der Gabelbogen weist eine Achse auf, die in einem Mittelpunkt eines dem Kreisringabschnitt entsprechenden Kreises angeordnet und zumindest im Wesentlichen senkrecht zu einer Scheibenebene des Gabelbogens ausgerichtet ist. Die Achse des Gabelbogens fällt mit der Drehachse der Schaltmuffe zusammen. Richtungsbezeichnungen wie "axial", "radial" und "in Umfangsrichtung" sollen insbesondere bezogen auf die Verschieberichtung und/oder bezogen auf die Achse des Gabelbogens verstanden werden. Unter einer "axialen" Richtung soll in diesem Zusammenhang die Richtung der Achse des Gabelbogens und/oder die Verschieberichtung verstanden werden. Unter einer "radialen" Richtung soll in diesem Zusammenhang eine Richtung verstanden werden, die senkrecht zu der Achse des Gabelbogens und/oder zu der Verschieberichtung orientiert ist und, welche die Achse des Gabelbogens und/oder die Drehachse der Schaltmuffe schneidet. Unter einer "Umfangsrichtung" soll in diesem Zusammenhang insbesondere eine Richtung senkrecht zu der axialen Richtung und senkrecht zu der radialen Richtung verstanden werden. Darunter, dass der Gabelbogen die Schaltmuffe "teilweise umgreift" soll in diesem Zusammenhang insbesondere verstanden werden, dass der Gabelbogen einen Innenumfang aufweist, der sich zumindest teilweise entlang eines Außenumfangs der Schaltmuffe erstreckt. Bevorzugt entspricht der Verlauf des Innenumfangs zumindest streckenweise einem Verlauf des Außenumfangs der Schaltmuffe. Vorzugsweise weist der Gabelbogen entlang eines Innenumfangs einen Rand auf, der in einem montierten Zustand in die Schaltmuffe eingreift. Bevorzugt ist der Gabelbogen dazu vorgesehen, zumindest im Wesentlichen in radialer Richtung in die Schaltmuffe einzugreifen. Vorzugsweise ist der Bereich der Stufung bogenförmig ausgebildet. Bevorzugt ist der Bereich der Stufung in Form eines Kreisringabschnitts ausgebildet. Unter einer "axialen Stufung" soll in diesem Zusammenhang ein Übergang zwischen zwei radial zueinander benachbart angeordneten Abschnitten verstanden werden, die axial versetzt zueinander angeordnet sind. Vorzugsweise weist der Gabelbogen zumindest ein axiales Schnittprofil auf, das im Bereich der Stufung zumindest zwei gleichgerichtete zumindest im Wesentlichen S-förmige Konturen aufweist. Unter einem "axialen Schnittprofil" soll in diesem Zusammenhang insbesondere ein Schnittprofil verstanden werden, das durch einen Schnitt entlang einer Schnittebene entsteht, welche die Achse des Gabelbogens und/oder die Drehachse der Schaltmuffe einschließt. Insbesondere ist die Schnittebene parallel zu der Verschieberichtung der Schaltgabel angeordnet. Insbesondere ist die Schnittebene senkrecht zu der Umfangsrichtung angeordnet. Vorzugsweise schließt die Schnittebene einen beliebigen Winkel mit einer axialen Symmetrieebene der Schaltgabel ein. Bevorzugt wird das Schnittprofil im Bereich der Stufung durch die S-förmigen Konturen begrenzt. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass der Gabelbogen zumindest ein axiales Schnittprofil aufweist, das zumindest zwei S-förmigen Konturen aufweist, die zumindest im Wesentlichen parallel zueinander angeordnet sind. Dadurch kann eine besonders hohe Steifigkeit des Gabelbogens erreicht werden. Unter einer "S-förmigen Kontur" soll in diesem Zusammenhang insbesondere eine Kontur verstanden werden, deren Verlauf zwei zueinander entgegengesetzt orientierte Richtungsänderungen, insbesondere Bögen oder Ecken, aufweist. Vorzugsweise weisen die Richtungsänderungen einen gleichen Betrag auf. Vorzugsweise weist der Gabelbogen eine Dicke auf, die im Bereich der Stufung zumindest im Wesentlichen konstant ist. Unter einer "Dicke" des Gabelbogens soll in diesem Zusammenhang insbesondere eine axiale Materialstärke verstanden werden.

In einer vorteilhaften Ausgestaltung weist der Gabelbogen zumindest zwei Bogenebenen auf, die jeweils senkrecht zu einer Verschieberichtung des Gabelbogens und axial versetzt zueinander angeordnet sind. Dadurch kann ein von der Schaltgabel beanspruchter Bauraum weiter reduziert werden. Unter einer "Bogenebene" soll in diesem Zusammenhang insbesondere eine Ebene verstanden werden, in der sich zumindest ein Abschnitt des Gabelbogens erstreckt. Vorzugsweise ist die Bogenebene als eine Mittelebene des Abschnitts ausgebildet. Vorzugsweise weist der Abschnitt eine Umfangserstreckung von wenigstens 60 Grad, bevorzugt von wenigstens 120 Grad und besonders bevorzugt von wenigstens 170 Grad auf. Vorzugsweise weist der Gabelbogen zumindest ein axiales Schnittprofil auf, das eine im Wesentlichen in radialer Richtung verlaufende Mittelachse aufweist, die radial unterhalb der Stufung und radial oberhalb der Stufung zumindest im Wesentlichen senkrecht zu der Verschieberichtung des Gabelbogens verläuft. Darunter, dass ein Punkt und/oder ein Bereich "radial unterhalb" eines Bezugspunkts und/oder eines Bezugsbereichs angeordnet ist/sind, soll in diesem Zusammenhang insbesondere verstanden werden, dass der Punkt und/oder der Bereich einen kleineren Abstand als der Bezugspunkt und/oder der Bezugsbereich zu einer Bezugsachse aufweist/aufweisen. Darunter, dass ein Punkt und/oder ein Bereich "radial oberhalb" eines Bezugspunkts und/oder eines Bezugsbereichs angeordnet ist/sind, soll in diesem Zusammenhang insbesondere verstanden werden, dass der Punkt und/oder der Bereich einen größeren Abstand als der Bezugspunkt und/oder der Bezugsbereich zu einer Bezugsachse aufweist/aufweisen.

In vorteilhafter Weise umfasst die Schaltgabel zumindest ein in dem Bereich angeordnetes Eingriffelement, das dazu vorgesehen ist, mit der Schaltmuffe zusammenzuwirken. Dadurch kann eine besonders geringe Reibung zwischen der Schaltgabel und der Schaltmuffe erreicht werden. Es kann ein besonders effizientes Fahrzeuggetriebe bereitgestellt werden. Eine axiale Position des Eingriffelements kann besonders flexibel festgelegt werden, wodurch ein besonders kompaktes Fahrzeuggetriebe bereitgestellt werden kann. Insbesondere weist das Eingriffelement zumindest eine Kontaktfläche auf, die zu einem Kontakt mit der Schaltmuffe vorgesehen ist und die zumindest im Wesentlichen senkrecht zu der Verschieberichtung ausgerichtet ist. Es ist denkbar, dass die Schaltgabel lediglich ein einziges Eingriffelement aufweist, das sich vorzugsweise zumindest im Wesentlichen entlang eines gesamten Innenumfangs des Gabelbogens erstreckt. Bevorzugt weist die Schaltgabel in dem Bereich zumindest ein weiteres Eingriffelement auf und die Eingriffelemente sind in Umfangrichtung versetzt zueinander angeordnet. Es ist denkbar, dass das zumindest eine Eingriffelement einstückig mit dem Gabelbogen ausgebildet ist.

Ferner wird vorgeschlagen, dass der Gabelbogen im Bereich der Stufung eine maximale Dicke aufweist und die Stufung eine Stufenhöhe aufweist, die größer ist als 50% der maximalen axialen Dicke. Dadurch kann auf besonders einfache Weise eine große Steifigkeit des Gabelbogens erreicht werden. Eine axiale Position von Eingriffelementen kann besonders flexibel festgelegt werden. Unter einer "Stufenhöhe" soll in diesem Zusammenhang insbesondere ein axialer Versatz zweier Abschnitte verstanden werden, die auf verschiedenen Seiten der Stufung angeordnet sind. Vorzugsweise ist die Stufenhöhe größer als 60%, bevorzugt 70% der maximalen Dicke des Gabelbogens im Bereich der Stufung. Vorzugsweise ist die Stufenhöhe kleiner als 90%, bevorzugt 80% einer minimalen Dicke des Gabelbogens im Bereich der Stufung.

In einer vorteilhaften Ausgestaltung weist der Bereich der Stufung eine Erstreckung in einer Umfangsrichtung von wenigstens 60 Grad auf. Dadurch kann eine Belastbarkeit der Schaltgabel weiter erhöht werden. Vorzugsweise weist der Bereich der Stufung eine Umfangserstreckung von wenigstens 120 Grad, bevorzugt von wenigstens 150 Grad, besonders bevorzugt von wenigstens 170 Grad auf.

Ferner wird vorgeschlagen, dass der Gabelbogen im Bereich der Stufung eine minimale Dicke aufweist und die Stufung eine radiale Erstreckung aufweist, die kleiner ist als ein 2-Faches der minimalen Dicke. Dadurch wird eine Steifigkeit des Gabelbogens weiter erhöht. Vorzugsweise beträgt die radiale Erstreckung weniger als das 1,5-fache, bevorzugt weniger als das 1,25-fache und besonders bevorzugt weniger als das 1,0-fache der minimalen Dicke. Vorzugsweise weist die Stufung einen radialen Abstand von einem Innenumfang des Gabelbogens auf, der kleiner als 30 mm, bevorzugt kleiner als 25 mm und besonders bevorzugt kleiner als 20 mm ist.

In einer vorteilhaften Ausgestaltung ist der Gabelbogen zumindest in dem Bereich der Stufung zumindest teilweise durchgesetzt, gezogen, geschmiedet oder gegossen ausgebildet. Dadurch kann ein besonders kostengünstiges Herstellungsverfahren erreicht werden. Eine Form der Schaltgabel kann in vorteilhafter Weise an eine Geometrie weiterer Elemente des Fahrzeuggetriebes angepasst werden. Es ist denkbar, dass der Gabelbogen mehrteilig, insbesondere zweiteilig ausgebildet ist, und beispielsweise Elemente aufweist, die im Bereich der Stufung miteinander verbunden sind. Es ist denkbar, dass der Gabelbogen einen Grundkörper und eine Mehrzahl von Eingriffbögen umfasst, an denen jeweils zumindest ein Eingriffelement angeordnet ist und die in einer Umfangrichtung zueinander versetzt an dem Grundkörper angeordnet und vorzugsweise fest mit dem Grundkörper verbunden sind.

Ferner wird vorgeschlagen, dass der Gabelbogen zumindest in einem weiteren Bereich zumindest eine weitere axiale Stufung aufweist. Dadurch kann der Gabelbogen besonders flexibel an einen vorhandenen Bauraum angepasst werden. Vorzugsweise ist der weitere Bereich bogenförmig ausgebildet. Bevorzugt ist der weitere Bereich zumindest im Wesentlichen in Form eines Kreisringabschnitts ausgebildet. Vorzugsweise ist der weitere Bereich zumindest im Wesentlichen konzentrisch zu dem Bereich der ersten Stufung angeordnet. Bevorzugt sind die Stufungen radial beabstandet zueinander angeordnet. Es ist denkbar, dass der Gabelbogen zumindest in einem dritten Bereich zumindest eine dritte axiale Stufung aufweist. Es ist denkbar, dass die Stufungen eine gemeinsame axiale Richtung aufweisen. Es ist denkbar, dass die Stufungen einander entgegengesetzte axiale Richtungen aufweisen. In einer alternativen Ausgestaltung ist es denkbar, dass der Gabelbogen einen Kragen aufweist, der in axialer Richtung über eine Scheibenebene des Gabelbogens ausgreift und sich in Umfangsrichtung erstreckt. Dadurch kann eine Steifigkeit der Schaltgabel weiter erhöht werden.

Ferner wird ein Fahrzeuggetriebe mit zumindest einer erfindungsgemäßen Schaltgabel vorgeschlagen. Dadurch kann ein besonders kompaktes Fahrzeuggetriebe bereitgestellt werden. Es kann ein besonders zuverlässiges Fahrzeuggetriebe bereitgestellt werden. Es können geringe Wartungs- und/oder Reparaturkosten erreicht werden.

Weitere Vorteile ergeben sich aus der folgenden Figurenbeschreibung. In den Figuren sind fünf Ausführungsbeispiele der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen, wobei die vorliegenden Ansprüche die möglichen Kombinationen bestimmen.

Dabei zeigen:
- Fig. 1: eine schematische Übersicht eines Antriebsstrangs eines Fahrzeugs mit einem Fahrzeuggetriebe,
- Fig. 2: eine perspektivische Ansicht einer Schaltgabel des Fahrzeuggetriebes,
- Fig. 3: eine perspektivische Ansicht der Schaltgabel und einer Schaltmuffe,
- Fig. 4: eine teilgeschnittene Ansicht der Schaltgabel und der Schaltmuffe in zwei Schaltstellungen,
- Fig. 5: eine perspektivische Ansicht einer Schaltgabel eines weiteren Ausführungsbeispiels mit einem gezogen ausgebildeten Gabelbogen,
- Fig. 6: eine Schnittansicht des des Gabelbogens nach Fig. 5,
- Fig. 7: eine Schnittansicht eines Ausführungsbeispiels einer Schaltgabel mit einem geschmiedeten Gabelbogen,
- Fig. 8: eine Schnittansicht eines Ausführungsbeispiels einer Schaltgabel mit einem zweiteiligen Gabelbogen,
- Fig. 9: eine Schnittansicht eines Ausführungsbeispiels einer Schaltgabel mit einem mehrfach in einer gleichen Richtung gestuften Gabelbogen und
- Fig. 10: eine Schnittansicht eines nicht unter den Anspruch 1 fallenden Ausführungsbeispiels einer Schaltgabel mit einem mehrfach in zueinander entgegengesetzten Richtungen gestuften Gabelbogen.

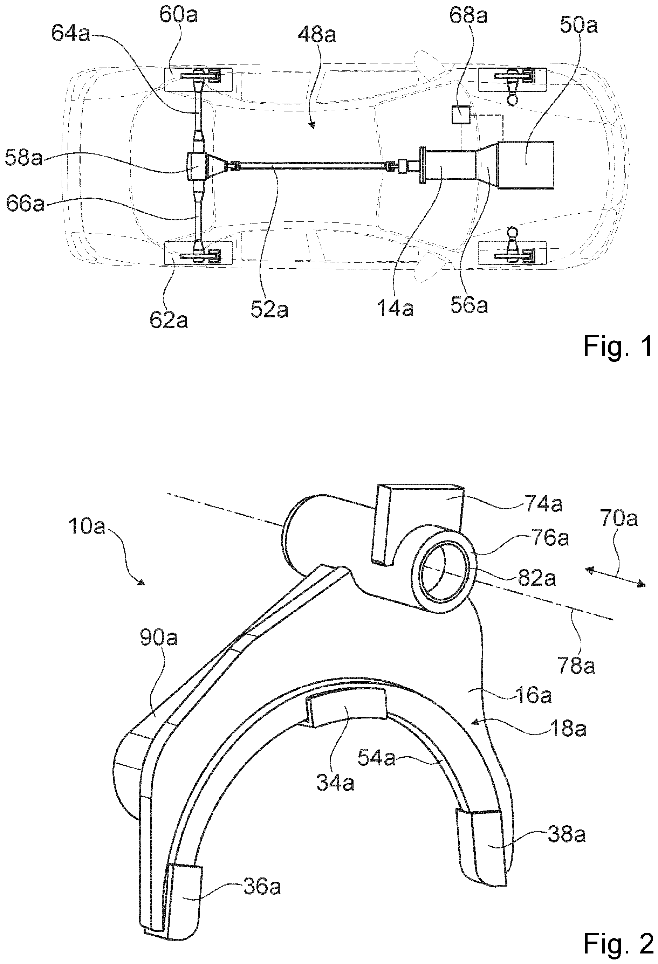

Figur 1 zeigt einen Antriebsstrang 48a eines Kraftfahrzeugs. Der Antriebsstrang 48a umfasst eine Brennkraftmaschine 50a und ein Fahrzeuggetriebe 14a mit einer Kupplungsvorrichtung 56a. Der Antriebsstrang 48a umfasst ferner ein Differentialgetriebe 58a und zwei Antriebsräder 60a, 62a, sowie eine Antriebswelle 52a, die zwischen dem Fahrzeuggetriebe 14a und dem Differentialgetriebe 58a angeordnet ist, und zwei weitere Antriebswellen 64a, 66a, die jeweils zwischen dem Differentialgetriebe 58a und einem der Antriebsräder 60a, 62a angeordnet sind. Die Kupplungsvorrichtung 56a ist dazu vorgesehen, das Fahrzeuggetriebe 14a antriebstechnisch zumindest zeitweise von der Brennkraftmaschine 50a zu trennen. Das Fahrzeuggetriebe 14a ist dazu vorgesehen, eine Drehzahl der Brennkraftmaschine 50a in eine Drehzahl der Antriebswelle 52a zu übersetzen. Das Fahrzeuggetriebe 14a weist eine Mehrzahl von Gängen auf, die jeweils unterschiedliche Übersetzungen aufweisen. Das Kraftfahrzeug umfasst eine Steuer- und/oder Regeleinheit 68a, die zu einer Steuerung und/oder Regelung der Brennkraftmaschine 50a und des Fahrzeuggetriebes 14a vorgesehen ist.

Figur 2 zeigt eine Schaltgabel 10a zu einer Betätigung einer Schaltmuffe 12a in dem Fahrzeuggetriebe 14a mit einem Gabelbogen 16a, der die Schaltmuffe 12a in einem montierten Zustand zumindest teilweise umgreift. Die Schaltgabel 10a ist als ein Teil des Fahrzeuggetriebes 14a ausgebildet. Der Gabelbogen 16a umgreift die Schaltmuffe 12a bezogen auf einen Außenumfang der Schaltmuffe 12a in einem Winkelbereich von zumindest im Wesentlichen 180 Grad. Der Gabelbogen 16a weist einen Innenumfang 54a auf, der in einem montierten Zustand der Schaltmuffe 12a zugewandt ist. Der Gabelbogen 16a weist an dem Innenumfang 54a einen Rand auf, der in einem montierten Zustand in die Schaltmuffe 12a eingreift. Die Schaltgabel 10a weist eine Verschieberichtung 70a auf, in welcher die Schaltmuffe 12a bei einem Schaltvorgang verschoben wird. Die Schaltmuffe 12a weist eine Drehachse 72a auf, die parallel zu der Verschieberichtung 70a der Schaltgabel 10a angeordnet ist. Die Schaltgabel 10a weist einen Mitnehmer 74a auf, der dazu vorgesehen ist, eine Verschiebekraft zu einem Schaltvorgang in die Schaltgabel 10a einzuleiten. Die Schaltgabel 10a weist ein Führungsrohr 76a mit einer Achse 78a auf, die parallel zu der Verschieberichtung 70a angeordnet ist. Das Führungsrohr 76a ist dazu vorgesehen, die Schaltgabel 10a auf einem Führungsstab 80a des Fahrzeuggetriebes 14a in einer axialen Richtung zu führen. Die Schaltgabel 10a weist eine Führungshülse 82a auf, die in einem montierten Zustand in das Führungsrohr 76a eingesetzt ist. Die Führungshülse 82a ist als eine Gleithülse ausgebildet. Der Mitnehmer 74a und das Führungsrohr 76a sind fest miteinander verbunden. Der Mitnehmer 74a und das Führungsrohr 76a sind beispielsweise stoffschlüssig miteinander verbunden. Der Mitnehmer 74a ist scheibenförmig ausgebildet. Der Mitnehmer 74a weist eine Scheibenebene auf, die senkrecht zu der Verschieberichtung 70a angeordnet ist. Der Mitnehmer 74a ist gabelförmig ausgebildet und weist eine halbkreisförmige Gabelöffnung auf. In einem montierten Zustand ist das Führungsrohr 76a in die Gabelöffnung des Mitnehmers 74a eingesetzt. Der Mitnehmer 74a umgreift das Führungsrohr 76a. Alternativ kann der Mitnehmer 74a eine kreisförmige Öffnung zu einer Aufnahme des Führungsrohrs 76a aufweisen und das Führungsrohr 76a durchdringt in einem montierten Zustand den Mitnehmer 74a. Es ist denkbar, dass der Mitnehmer 74a einstückig mit dem Gabelbogen 16a ausgebildet ist.

Der Gabelbogen 16a ist dazu vorgesehen, die Schaltmuffe 12a bei einem Schaltvorgang in eine Verschieberichtung 70a zu bewegen. Der Gabelbogen 16a ist dazu vorgesehen, eine Verschiebekraft von dem Führungsrohr 76a auf die Schaltmuffe 12a zu übertragen. Der Gabelbogen 16a ist fest mit dem Führungsrohr 76a verbunden. Der Gabelbogen 16a ist beispielsweise stoffschlüssig mit dem Führungsrohr 76a verbunden. Der Gabelbogen 16a ist scheibenförmig ausgebildet. Der Gabelbogen 16a weist eine Dicke auf, die einer axialen Materialstärke des Gabelbogens 16a entspricht. Der Gabelbogen 16a weist eine Scheibenebene auf. Die Scheibenebene ist senkrecht zu der Verschieberichtung 70a angeordnet. Die Scheibenebene ist senkrecht zu der Achse 78a des Führungsrohrs 76a angeordnet. Die Schaltgabel 10a weist Stützelemente 90a auf, von denen eines in Figur 2 dargestellt ist. Die Stützelemente 90a sind streifenförmig ausgebildet. Die Stützelemente 90a verlaufen im Wesentlichen in Umfangsrichtung Eine Streifenebene der Stützelemente 90a, 92a ist jeweils zumindest im Wesentlichen senkrecht zu der Scheibenebene des Gabelbogens 16a angeordnet. Die Stützelemente 90a, 92a sind fest mit dem Gabelbogen 16a der Schaltgabel 10a verbunden.

Der Gabelbogen 16a weist in einem Bereich 18a eine axiale Stufung auf. Der Bereich 18a ist bogenförmig ausgebildet. Der Bereich 18a ist in Form eines Kreisringabschnitts ausgebildet. Der Bereich 18a umgreift die Schaltmuffe 12a in einem montierten Zustand zumindest teilweise. Der Bereich 18a erstreckt sich zumindest im Wesentlichen 180 entlang des gesamten Innenumfangs 54a des Gabelbogens 16a. Der Bereich 18a weist eine Erstreckung in einer Umfangsrichtung von zumindest im Wesentlichen 180 Grad auf. Eine Erstreckung des Bereichs 18a entspricht einer Erstreckung des Gabelbogens 16a in Umfangsrichtung. Die Schaltgabel 10a weist drei in dem Bereich 18a angeordnete Eingriffelemente 34a, 36a, 38a auf, die dazu vorgesehen sind, mit der Schaltmuffe 12a zusammenzuwirken. Der Bereich 18a ist benachbart zu dem Innenumfang 54a des Gabelbogens 16a angeordnet. Ein erstes Eingriffelement 34a ist bezogen auf eine Umfangsrichtung mittig an dem Innenumfang 54a des Gabelbogens 16a angeordnet. Zwei weitere der Eingriffelemente 36a, 38a sind jeweils an einem Ende des Gabelbogens 16a an dem Innenumfang 54a des Gabelbogens 16a angeordnet. Die Eingriffelemente 34a, 36a, 38a sind aus Polyamid ausgebildet. Es ist denkbar, dass die Eingriffelemente 34a, 36a, 38a aus einem anderen dem Fachmann geeignet erscheinenden Material ausgebildet sind, beispielsweise aus einem anderen Kunststoff oder aus einem Metall. Die Eingriffelemente 34a, 36a, 38a sind fest mit dem Gabelbogen 16a verbunden. Die Eingriffelemente 34a, 36a, 38a sind an den Gabelbogen 16a angespritzt.

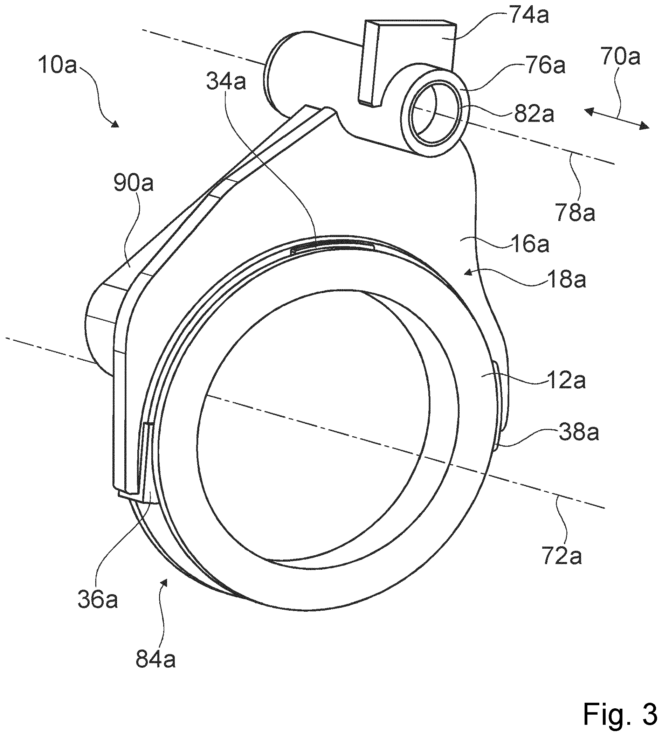

Die Eingriffelemente 34a, 36a, 38a sind dazu vorgesehen, eine Verschiebekraft zu einem Schaltvorgang auf die Schaltmuffe 12a zu übertragen. Die Eingriffelemente 34a, 36a, 38a sind dazu vorgesehen, bei einem Schaltvorgang mit der Schaltmuffe 12a in Kontakt zu sein. Die Schaltmuffe 12a weist an einem Außenumfang eine Nut 84a auf, in welche die Eingriffelemente 34a, 36a, 38a in einem montierten Zustand eingreifen (vgl. Figur 3). Die Nut 84a ist ringförmig ausgebildet. Die Nut 84a ist in radialer Richtung 122a nach außen offen. Die Nut 84a weist ein U-förmiges axiales Schnittprofil auf. Die Nut 84a weist zwei einander axial gegenüberliegende Seitenwände 86a, 88a auf. Die Eingriffelemente 34a, 36a, 38a sind in einem montierten Zustand zumindest im Wesentlichen 180 in axialer Richtung zwischen den Seitenwänden 86a, 88a der Nut 84a angeordnet.

Der Bereich 18a der Stufung weist eine Erstreckung in Umfangsrichtung auf, die einer Erstreckung in Umfangsrichtung des Gabelbogens 16a entspricht. Der Bereich 18a der Stufung weist eine Erstreckung in Umfangsrichtung von wenigstens 120 Grad auf. Der Bereich 18a der Stufung weist eine Erstreckung in Umfangsrichtung von zumindest im Wesentlichen 180 Grad auf. Der Gabelbogen 16a weist an einer ersten Stirnseite einen ersten Stufenrand auf. Der Gabelbogen 16a weist an einer weiteren Stirnseite, die von der ersten Stirnseite abgewandt angeordnet ist, einen weiteren Stufenrand auf. Der erste Stufenrand und der weitere Stufenrand sind konzentrisch zueinander angeordnet. Der erste Stufenrand und der weitere Stufenrand weisen jeweils eine Erstreckung in Umfangsrichtung auf, die einer Erstreckung in Umfangsrichtung des Gabelbogens 16a entspricht. Der erste Stufenrand ist konkav-konvex ausgebildet. Der weitere Stufenrand ist konkav-konvex ausgebildet.

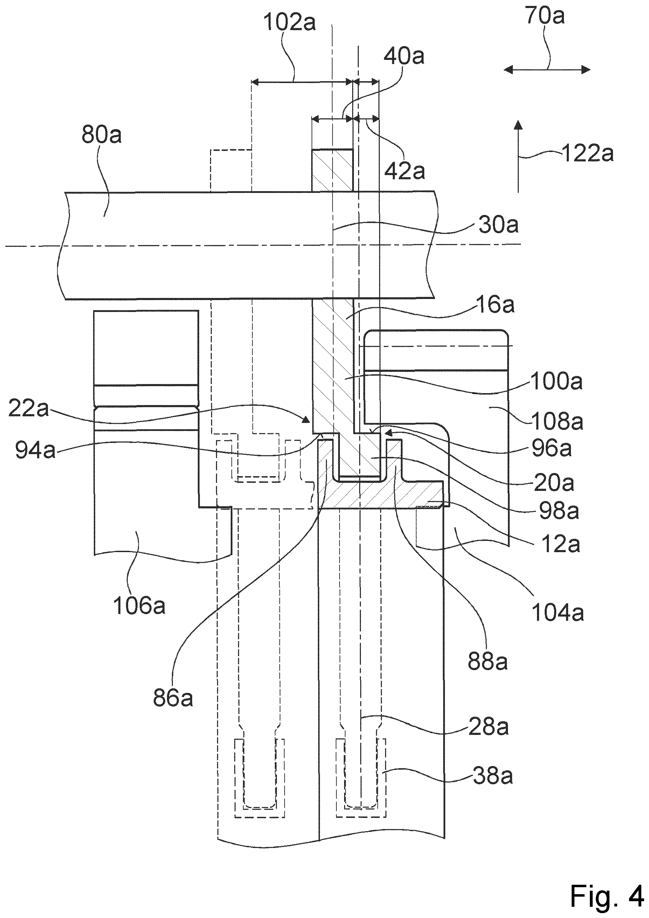

Der Gabelbogen weist zumindest ein axiales Schnittprofil auf, das zumindest zwei gleichgerichtete S-förmige Konturen 20a, 22a aufweist (vgl. Figur 4). Die Stufung weist die S-förmigen Konturen 20a, 22a an dem axialen Schnittprofil auf. Eine erste der Konturen 20a ist an der ersten Stirnseite des Gabelbogens 16a angeordnet eine weitere der Konturen 22a ist an der weiteren Stirnseite des Gabelbogens 16a angeordnet. Die S-förmigen Konturen 20a, 22a weisen in einem Verlauf in radialer Richtung 122a jeweils einen ersten Bogen und jeweils einen zweiten Bogen auf. Der erste Bogen der ersten S-förmigen Kontur 20a ist gleichgerichtet zu dem ersten Bogen der weiteren S-förmigen Kontur 22a ausgebildet. Der weitere Bogen der ersten S-förmigen Kontur 20a ist gleichgerichtet zu dem weiteren Bogen der weiteren S-förmigen Kontur 22a ausgebildet. Die S-förmigen Konturen 20a, 22a sind zumindest im Wesentlichen parallel zueinander angeordnet. Die S-förmigen Konturen 20a, 22a sind parallel versetzt zueinander angeordnet. In dem vorliegenden Ausführungsbeispiel ist der Gabelbogen 16a zumindest in einem Bereich 18a der Stufung durchgesetzt ausgebildet. Die S-förmigen Konturen 20a, 22a sind zumindest im Wesentlichen 180 lediglich axial versetzt zueinander angeordnet. Die Bogen der S-förmigen Konturen 20a, 22a weisen jeweils einen Krümmungsradius auf, der kleiner ist als eine Hälfte der Dicke des Gabelbogens 16a im Bereich 18a der Stufung. Der Gabelbogen 16a weist in dem vorliegenden Ausführungsbeispiel zwei radial ausgerichtete Stufenflächen 94a, 96a auf. Eine erste der Stufenflächen 94a ist radial nach innen gerichtet. Ein Normalenvektor der ersten Stufenfläche 94a ist radial nach innen gerichtet. Eine zweite der Stufenflächen 96a ist radial nach außen gerichtet. Ein Normalenvektor der zweiten Stufenfläche 96a ist radial nach außen gerichtet.

Der Gabelbogen 16a weist einen ersten Abschnitt 98a auf, der radial unterhalb der Stufung angeordnet ist. Der Gabelbogen 16a weist einen weiteren Abschnitt 100a auf, der radial oberhalb der Stufung angeordnet ist. Der erste Abschnitt 98a ist in einer ersten Bogenebene 28a angeordnet. Der weitere Abschnitt 98a ist in einer weiteren Bogenebene 30a angeordnet. Die Bogenebenen 28a, 30a sind jeweils senkrecht zu der Verschieberichtung 70a angeordnet. Die Bogenebenen 28a, 30a sind axial versetzt zueinander angeordnet. Die weitere Bogenebene 30a entspricht der Scheibenebene des Gabelbogens 16a. Die Stufung bildet einen Übergang zwischen den Abschnitten 98a, 100a. Die Stufung ist radial zwischen den Abschnitten 98a, 100a angeordnet. Der erste Abschnitt 98a greift in einem montierten Zustand zumindest teilweise in die Nut 84a der Schaltmuffe 12a ein.

Figur 4 zeigt die Schaltgabel 10a und die Schaltmuffe 12a in einem ersten Schaltzustand und in einem weiteren Schaltzustand. Die Schaltgabel 10a und die Schaltmuffe 12a weisen in dem weiteren Schaltzustand eine Position auf, die axial versetzt zu der Position in dem ersten Schaltzustand angeordnet ist. Die Schaltgabel 10a ist dazu vorgesehen, die Schaltmuffe 12a entlang eines Schaltwegs 102a in der Verschieberichtung 70a zu bewegen. Die Schaltmuffe 12a ist in dem ersten Schaltzustand in Eingriff mit einem ersten Zahnrad 104a des Fahrzeuggetriebes 14a. Die Schaltmuffe 12a ist in dem weiteren Schaltzustand in Eingriff mit einem weiteren Zahnrad 106a des Fahrzeuggetriebes 14a. Das erste Zahnrad 104a weist an einem Außenumfang einen Ring 108a auf, der in dem ersten Schaltzustand axial mit der Schaltmuffe 12a überlappt. Die Schaltmuffe 12a greift in dem ersten Schaltzustand axial teilweise in das erste Zahnrad 104a ein. Der erste Abschnitt 98a des Gabelbogens 16a greift in dem ersten Schaltzustand teilweise in das erste Zahnrad 104a ein. Ein axialer Bauraum kann vorteilhaft ausgenutzt werden. Der zweite Abschnitt 100a des Gabelbogens 16a überlappt in axialer Richtung mit einer der Seitenwände 86a der Nut 84a der Schaltmuffe 12a. Die Seitenwand 86a der Nut 84a greift in axialer Richtung in den Gabelbogen 16a ein.

Die Dicke des Gabelbogens 16a entspricht im Bereich 18a der Stufung einer maximalen Dicke 40a. Die Stufung weist eine Stufenhöhe 42a auf, die größer ist als 50% der maximalen Dicke 40a des Gabelbogens 16a. Die Stufenhöhe 42a entspricht zumindest im Wesentlichen 60% der maximalen Dicke 40a des Gabelbogens 16a. Die Seitenwände 86a, 88a der Nut 84a weisen jeweils eine Dicke auf. Die Stufenhöhe 42a entspricht der Dicke einer der Seitenwände 86a der Nut 84a. Der Gabelbogen 16a weist im Bereich 18a der Stufung eine minimale Dicke auf. Die Stufung weist eine radiale Erstreckung auf, die kleiner ist als ein 2-Faches der minimalen Dicke des Gabelbogens 16a im Bereich 18a der Stufung.

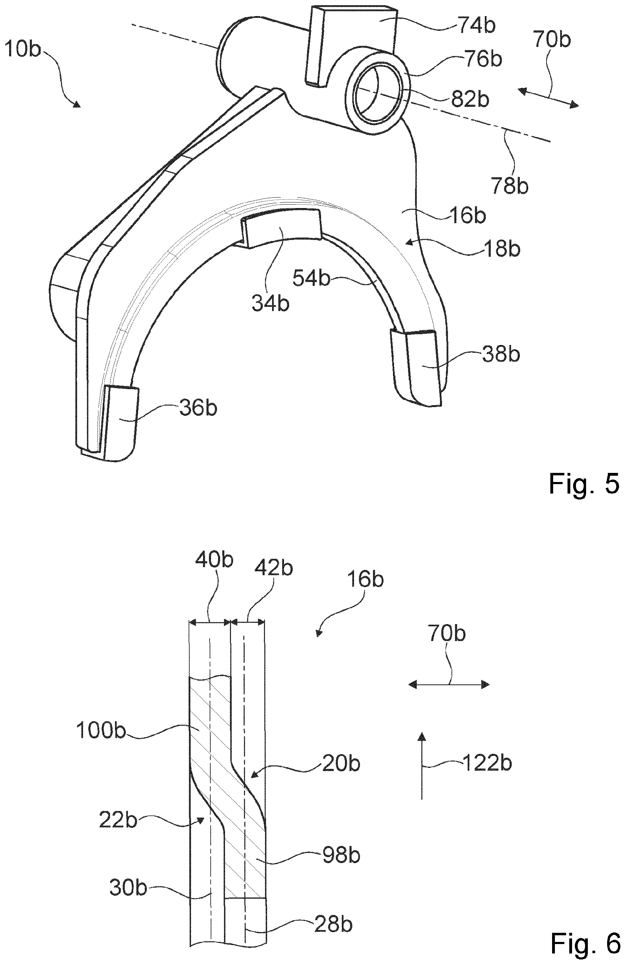

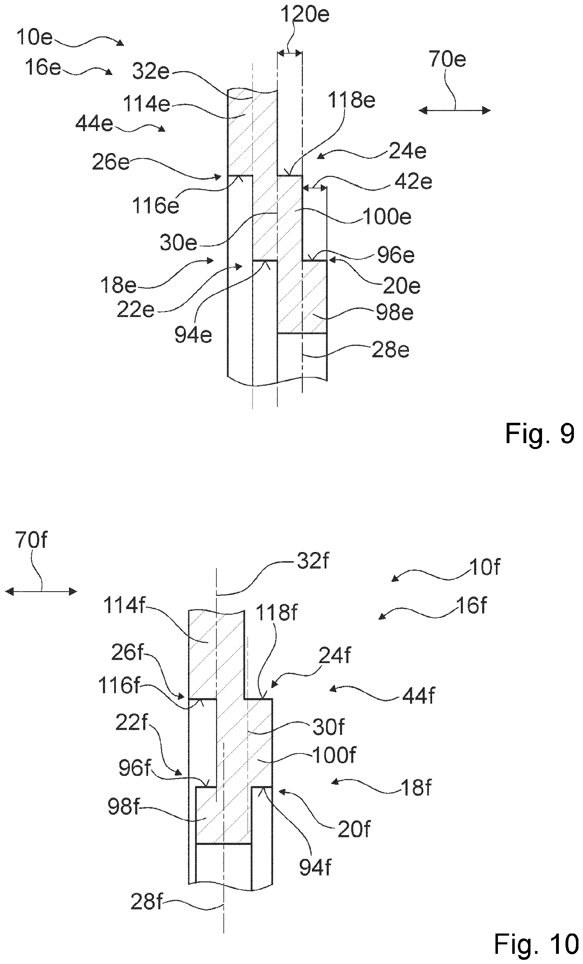

In den Figuren 5 bis 9 sind weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figuren 1 bis 4, verwiesen werden kann. Zur Unterscheidung der Ausführungsbeispiele ist der Buchstabe a in den Bezugszeichen des Ausführungsbeispiels der Figuren 1 bis 4 durch die Buchstaben b bis f in den Bezugszeichen der Ausführungsbeispiele der Figuren 5 bis 10 ersetzt, wobei das Ausführungsbeispiel nach Fig. 10 nicht unter den Wortlaut des vorliegenden Anspruchs 1 fällt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figuren 1 bis 4, verwiesen werden.

Figur 5 zeigt ein weiteres Ausführungsbeispiel einer Schaltgabel 10b zu einer Betätigung einer Schaltmuffe in einem Fahrzeuggetriebe mit einem Gabelbogen 16b, der die Schaltmuffe in einem montierten Zustand zumindest teilweise umgreift. Analog zu dem vorangehenden Ausführungsbeispiel umgreift der Gabelbogen 16b die Schaltmuffe bezogen auf einen Außenumfang der Schaltmuffe in einem Winkelbereich von zumindest im Wesentlichen 180 Grad. Der Gabelbogen 16b weist einen Innenumfang 54b auf, der in einem montierten Zustand der Schaltmuffe zugewandt ist. Der Gabelbogen 16b weist an dem Innenumfang 54b einen Rand auf, der in einem montierten Zustand in die Schaltmuffe eingreift. Der Gabelbogen 16b ist dazu vorgesehen, die Schaltmuffe bei einem Schaltvorgang in einer Verschieberichtung 70b zu bewegen. Die Schaltgabel 10b weist einen Mitnehmer 74b auf, der dazu vorgesehen ist, eine Verschiebekraft zu einem Schaltvorgang in die Schaltgabel 10b einzuleiten. Die Schaltgabel 10b weist ein Führungsrohr 76b mit einer Achse 78b auf, die parallel zu der Verschieberichtung 70b angeordnet ist.

Der Gabelbogen 16b weist analog zu dem vorangehenden Ausführungsbeispiel in einem Bereich 18b eine axiale Stufung auf. Der Bereich 18b ist bogenförmig ausgebildet. Der Bereich 18b ist in Form eines Kreisringabschnitts ausgebildet. Der Bereich 18b umgreift die Schaltmuffe in einem montierten Zustand zumindest teilweise. Der Bereich 18b erstreckt sich zumindest im Wesentlichen 180 entlang des gesamten Innenumfangs 54b des Gabelbogens 16b. Der Bereich 18b der Stufung weist eine Erstreckung in Umfangsrichtung von wenigstens 120 Grad auf. Der Bereich 18b der Stufung weist eine Erstreckung in Umfangsrichtung von zumindest im Wesentlichen 180 Grad auf. Eine Erstreckung des Bereichs 18b entspricht einer Erstreckung des Gabelbogens 16b in Umfangsrichtung. Die Schaltgabel 10b weist drei Eingriffelemente 34b, 36b, 38b auf, die dazu vorgesehen sind, mit der Schaltmuffe zusammenzuwirken. Die Eingriffelemente 34b, 36b, 38b sind in dem Bereich 18b der Stufung angeordnet. Der Bereich 18b ist an einen Innenumfang 54b des Gabelbogens 16b angeordnet.

Der Gabelbogen 16b weist an einer ersten Stirnseite einen ersten Stufenrand auf. Der Gabelbogen 16b weist an einer weiteren Stirnseite, die von der ersten Stirnseite abgewandt angeordnet ist, einen weiteren Stufenrand auf. Der erste Stufenrand und der weitere Stufenrand sind konzentrisch zueinander angeordnet. Der erste Stufenrand und der weitere Stufenrand weisen jeweils eine Erstreckung in Umfangsrichtung auf, die einer Erstreckung in Umfangsrichtung des Gabelbogens 16b entspricht. Der erste Stufenrand ist konkav-konvex ausgebildet. Der weitere Stufenrand ist konkav-konvex ausgebildet.

Der Gabelbogen 16b weist zumindest ein axiales Schnittprofil auf, das zumindest zwei gleichgerichtete S-förmige Konturen 20b, 22b aufweist (vgl. Figur 6). Die Stufung weist die S-förmigen Konturen 20b, 22b an dem axialen Schnittprofil auf. Eine erste der Konturen 20b ist an der ersten Stirnseite des Gabelbogens 16b angeordnet. Eine weitere der Konturen 22b ist an der weiteren Stirnseite des Gabelbogens 16b angeordnet. Die S-förmigen Konturen 20b, 22b weisen in einem Verlauf in einer radialen Richtung 122b jeweils einen ersten Bogen und jeweils einen zweiten Bogen auf. Der erste Bogen der ersten S-förmigen Kontur 20b ist gleichgerichtet zu dem ersten Bogen der weiteren S-förmigen Kontur 22b ausgebildet. Der weitere Bogen der ersten S-förmigen Kontur 20b ist gleichgerichtet zu dem weiteren Bogen der weiteren S-förmigen Kontur 22b ausgebildet. Die S-förmigen Konturen 20b, 22b sind zumindest im Wesentlichen 180 parallel zueinander angeordnet. Die S-förmigen Konturen 20b, 22b sind parallel versetzt zueinander angeordnet. Im Unterschied zu dem vorangehenden Ausführungsbeispiel ist der Gabelbogen 16b zumindest in dem Bereich 18b der Stufung gezogen ausgebildet. Die S-förmigen Konturen 20b, 22b sind axial und radial versetzt zueinander angeordnet. Die Bogen der S-förmigen Konturen 20b, 22b weisen jeweils einen Krümmungsradius auf, der zumindest im Wesentlichen 180 einer Hälfte einer Dicke des Gabelbogens 16b im Bereich 18b der Stufung entspricht.

Der Gabelbogen 16b weist einen ersten Abschnitt 98b auf, der radial unterhalb der Stufung angeordnet ist. Der Gabelbogen 16b weist einen weiteren Abschnitt 100b auf, der radial oberhalb der Stufung angeordnet ist. Der erste Abschnitt 98b ist in einer ersten Bogenebene 28b angeordnet. Der weitere Abschnitt 100b ist in einer weiteren Bogenebene 30b angeordnet. Die Bogenebenen 28b, 30b sind jeweils senkrecht zu der Verschieberichtung 70b angeordnet. Die Bogenebenen 28b, 30b sind axial versetzt zueinander angeordnet. Die weitere Bogenebene 30b entspricht der Scheibenebene des Gabelbogens 16b. Die Stufung bildet einen Übergang zwischen den Abschnitten 98b, 100b. Die Stufung ist radial zwischen den Abschnitten 98b, 100b angeordnet. Der erste Abschnitt 98b greift in einem montierten Zustand zumindest teilweise in die Nut der Schaltmuffe ein.

Die Dicke des Gabelbogens 16b entspricht im Bereich 18b der Stufung einer maximalen Dicke 40b. Die Stufung weist eine Stufenhöhe 42b auf, die größer ist als 50% der maximalen Dicke 40b des Gabelbogens 16b. Die Stufenhöhe 42b entspricht zumindest im Wesentlichen 80% der maximalen Dicke 40b des Gabelbogens 16b. Die Stufung weist eine radiale Erstreckung auf, die kleiner ist als ein 2-Faches einer minimalen Dicke des Gabelbogens 16b im Bereich 18b der Stufung.

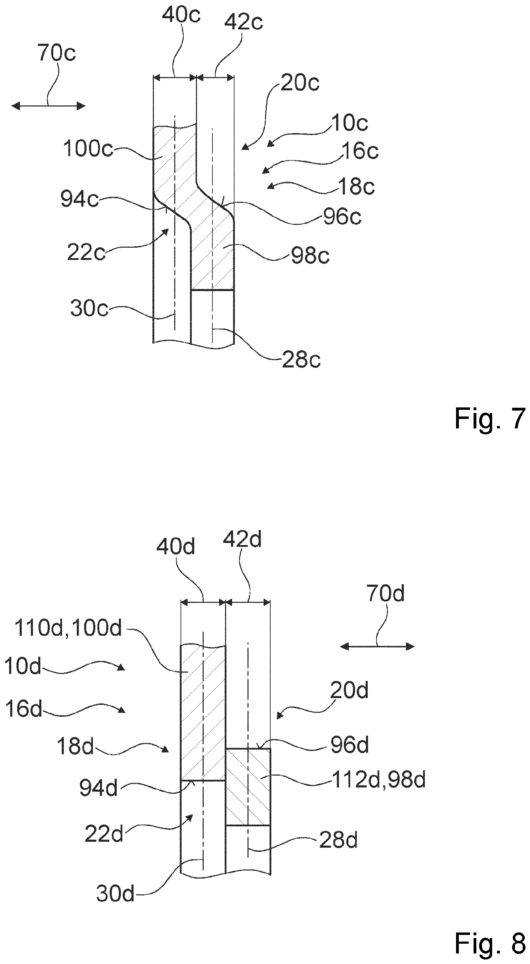

Figur 7 zeigt ein weiteres Ausführungsbeispiel einer Schaltgabel 10c zu einer Betätigung einer Schaltmuffe in einem Fahrzeuggetriebe mit einem Gabelbogen 16c, der die Schaltmuffe in einem montierten Zustand zumindest teilweise umgreift. Der Gabelbogen 16c weist an einem Innenumfang einen Rand auf, der in einem montierten Zustand in die Schaltmuffe eingreift. Der Gabelbogen 16c ist dazu vorgesehen, die Schaltmuffe bei einem Schaltvorgang in einer Verschieberichtung 70c zu bewegen. Der Gabelbogen 16c weist analog zu dem vorangehenden Ausführungsbeispiel in einem Bereich 18c eine axiale Stufung auf. Der Bereich 18c ist bogenförmig ausgebildet.

Der Gabelbogen 16c weist zumindest ein axiales Schnittprofil auf, das zumindest zwei gleichgerichtete S-förmige Konturen 20c, 22c aufweist. Die Stufung weist die S-förmigen Konturen 20c, 22c an dem axialen Schnittprofil auf. Eine erste der Konturen 20c ist an der ersten Stirnseite des Gabelbogens 16c angeordnet. Eine weitere der Konturen 22c ist an der weiteren Stirnseite des Gabelbogens 16c angeordnet. Die S-förmigen Konturen 20c, 22c weisen in einem radialen Verlauf jeweils einen ersten Bogen und jeweils einen zweiten Bogen auf. Der erste Bogen der ersten S-förmigen Kontur 20c ist gleichgerichtet zu dem ersten Bogen der weiteren S-förmigen Kontur 22c ausgebildet. Der weitere Bogen der ersten S-förmigen Kontur 20c ist gleichgerichtet zu dem weiteren Bogen der weiteren S-förmigen Kontur 22c ausgebildet. Die S-förmigen Konturen 20c, 22c sind zumindest im Wesentlichen parallel zueinander angeordnet. Die S-förmigen Konturen 20c, 22c sind parallel versetzt zueinander angeordnet. Im Unterschied zu dem vorangehenden Ausführungsbeispiel ist der Gabelbogen 16c zumindest in dem Bereich 18c der Stufung geschmiedet ausgebildet. Die S-förmigen Konturen 20c, 22c sind axial und radial versetzt zueinander angeordnet. Die Bogen der S-förmigen Konturen 20c, 22c weisen jeweils einen Krümmungsradius auf, der kleiner ist als eine Hälfte einer Dicke des Gabelbogens 16c im Bereich 18c der Stufung. Der Gabelbogen 16c weist zwei Stufenflächen 94c, 96c auf. Die Stufenflächen 94c, 96c sind parallelversetzt zueinander ausgerichtet. Die Stufenflächen 94c, 96c sind bezogen auf die Scheibenebene des Gabelbogens 16c schräg angeordnet.

Der Gabelbogen 16c weist einen ersten Abschnitt 98c auf, der radial unterhalb der Stufung angeordnet ist. Der Gabelbogen 16c weist einen weiteren Abschnitt 100c auf, der radial oberhalb der Stufung angeordnet ist. Der erste Abschnitt 98c ist in einer ersten Bogenebene 28c angeordnet. Der weitere Abschnitt 100c ist in einer weiteren Bogenebene 30c angeordnet. Die Bogenebenen 28c, 30c sind jeweils senkrecht zu der Verschieberichtung 70c angeordnet. Die Bogenebenen 28c, 30c sind axial versetzt zueinander angeordnet. Die weitere Bogenebene 30c entspricht der Scheibenebene des Gabelbogens 16c. Die Stufung bildet einen Übergang zwischen den Abschnitten 98c, 100c. Die Stufung ist radial zwischen den Abschnitten 98c, 100c angeordnet. Der erste Abschnitt 98c greift in einem montierten Zustand zumindest teilweise in eine Nut der Schaltmuffe ein.

Die Dicke des Gabelbogens 16c entspricht im Bereich 18c der Stufung einer maximalen Dicke 40c. Die Stufung weist eine Stufenhöhe 42c auf, die größer ist als 50% der maximalen Dicke 40c des Gabelbogens 16c. Die Stufenhöhe 42c entspricht zumindest im Wesentlichen 80% der maximalen Dicke 40c des Gabelbogens 16c. Der Gabelbogen 16c weist im Bereich 18c der Stufung eine minimale Dicke auf. Die Stufung weist eine radiale Erstreckung auf, die kleiner ist als ein 2-Faches der minimalen Dicke des Gabelbogens 16c im Bereich 18c der Stufung.

Figur 8 zeigt ein weiteres Ausführungsbeispiel einer Schaltgabel 10d zu einer Betätigung einer Schaltmuffe in einem Fahrzeuggetriebe mit einem Gabelbogen 16d, der die Schaltmuffe in einem montierten Zustand zumindest teilweise umgreift. Der Gabelbogen 16d weist an einem Innenumfang einen Rand auf, der in einem montierten Zustand in die Schaltmuffe eingreift. Der Gabelbogen 16d ist dazu vorgesehen, die Schaltmuffe bei einem Schaltvorgang in einer Verschieberichtung 70d zu bewegen. Der Gabelbogen 16d weist analog zu dem vorangehenden Ausführungsbeispiel in einem Bereich 18d eine axiale Stufung auf. Der Bereich 18d ist bogenförmig ausgebildet.

Der Gabelbogen 16d weist zumindest ein axiales Schnittprofil auf, das zumindest zwei gleichgerichtete S-förmige Konturen 20d, 22d aufweist. Die Stufung weist die S-förmigen Konturen 20d, 22d an dem axialen Schnittprofil auf. Eine erste der Konturen 20d ist an der ersten Stirnseite des Gabelbogens 16d angeordnet eine weitere der Konturen 22d ist an der weiteren Stirnseite des Gabelbogens 16d angeordnet. Die erste S-förmigen Kontur 20d ist gleichgerichtet zu der weiteren S-förmigen Kontur 20d ausgebildet. Die S-förmigen Konturen 20d, 22d sind zumindest im Wesentlichen parallel zueinander angeordnet. Die S-förmigen Konturen 20d, 22d sind parallel versetzt zueinander angeordnet. Im Unterschied zu dem vorangehenden Ausführungsbeispiel ist der Gabelbogen 16d zweiteilig ausgebildet. Der Gabelbogen 16d weist einen Grundkörper 110d und einen Eingriffbogen 112d auf, die fest miteinander verbunden sind. Der Grundkörper 110d und der Eingriffbogen 112d sind in dem vorliegenden Ausführungsbeispiel stoffschlüssig miteinander verbunden. Es ist denkbar, dass der Grundkörper 110d und der Eingriffbogen 112d auf eine andere dem Fachmann als geeignet erscheinende feste Verbindung aufweisen und beispielsweise über Verbindungselemente, wie Stifte oder dergleichen, miteinander verbunden sind. Der Grundkörper 110d und der Eingriffbogen 112d sind in dem Bereich 18d der Stufung radial überlappend angeordnet. Sie S-förmigen Konturen 20d, 22d sind axial und radial versetzt zueinander angeordnet. Der Gabelbogen 16d weist in dem vorliegenden Ausführungsbeispiel zwei radial ausgerichtete Stufenflächen 94d, 96d auf. Eine erste der Stufenflächen 94d ist radial nach innen gerichtet. Ein Normalenvektor der ersten Stufenfläche 94d ist radial nach innen gerichtet. Eine zweite der Stufenflächen 96d ist radial nach außen gerichtet. Ein Normalenvektor der zweiten Stufenfläche 96d ist radial nach außen gerichtet.

Der Gabelbogen 16d weist einen erste Abschnitt 98d auf, der radial unterhalb der Stufung angeordnet ist. Der Eingriffbogen 112d bildet den ersten Abschnitt 98d aus. Der Gabelbogen 16d weist einen weiteren Abschnitt 100d auf, der radial oberhalb der Stufung angeordnet ist. Der Grundkörper 110d bildet den weiteren Abschnitt 100d aus. Der erste Abschnitt 98d ist in einer ersten Bogenebene 28d angeordnet. Der Eingriffbogen 112d ist in der ersten Bogenebene 28d angeordnet. Der weitere Abschnitt 100d ist in einer weiteren Bogenebene 30d angeordnet. Die Bogenebenen 28d, 30d sind jeweils senkrecht zu der Verschieberichtung 70d angeordnet. Die Bogenebenen 28d, 30d sind axial versetzt zueinander angeordnet. Die Stufung bildet einen Übergang zwischen den Abschnitten 98d, 100d. Die Stufung ist radial zwischen den Abschnitten 98d, 100d angeordnet. Der erste Abschnitt 98d greift in einem montierten Zustand zumindest teilweise in eine Nut der Schaltmuffe ein.

Der Grundkörper 110d weist im Bereich 18d der Stufung eine Dicke 40d auf. Der Eingriffbogen 112d weist im Bereich 18d der Stufung eine Dicke auf. Die Stufung weist in dem vorliegenden Ausführungsbeispiel eine Stufenhöhe 42d auf, die der Dicke des Eingriffbogens 112d entspricht. Die Stufung weist eine radiale Erstreckung auf, die kleiner ist als ein 2-Faches der minimalen Dicke des Gabelbogens 16d im Bereich 18d der Stufung.

Figur 9 zeigt ein weiteres Ausführungsbeispiel einer Schaltgabel 10e zu einer Betätigung einer Schaltmuffe in einem Fahrzeuggetriebe mit einem Gabelbogen 16e, der die Schaltmuffe in einem montierten Zustand zumindest teilweise umgreift. Der Gabelbogen 16e weist an einem Innenumfang einen Rand auf, der in einem montierten Zustand in die Schaltmuffe eingreift. Der Gabelbogen 16e ist dazu vorgesehen, die Schaltmuffe bei einem Schaltvorgang in einer Verschieberichtung 70e zu bewegen. Der Gabelbogen 16e weist in einem Bereich 18e eine axiale Stufung auf. Im Unterschied zu den vorangehenden Ausführungsbeispielen weist der Gabelbogen 16e in einem weiteren Bereich 44e eine weitere axiale Stufung auf. Die Stufungen weisen eine gleiche axiale Richtung auf. Die Stufungen sind radial versetzt zueinander angeordnet. Die Stufungen sind konzentrisch zueinander angeordnet. Die Bereiche 18e, 44e sind konzentrisch zueinander angeordnet. Die Bereiche 18e, 44e sind jeweils bogenförmig ausgebildet.

Der Gabelbogen 16e weist zumindest ein axiales Schnittprofil auf, das vier gleichgerichtete S-förmige Konturen 20e, 22e, 24e, 26e aufweist. Eine erste der Konturen 20e und eine weitere der Konturen 24e sind an einer ersten Stirnseite des Gabelbogens 16e angeordnet. Eine dritte der Konturen 22e und eine vierte der Konturen 26e sind an einer weiteren Stirnseite des Gabelbogens 16e angeordnet. Die S-förmigen Konturen 20e, 22e, 24e, 26e sind gleichgereichtet zueinander angeordnet. Die S-förmigen Konturen 20e, 22e, 24e, 26e sind zumindest im Wesentlichen parallel zueinander angeordnet. Die S-förmigen Konturen 20e, 22e, 24e, 26e sind parallel versetzt zueinander angeordnet. Der Gabelbogen 16e weist in dem vorliegenden Ausführungsbeispiel vier radial ausgerichtete Stufenflächen 94e, 96e, 116e, 118e auf. Eine erste der Stufenflächen 94e und eine zweite der Stufenflächen 116e sind radial nach innen gerichtet. Eine dritte der Stufenflächen 96e und eine vierte der Stufenflächen 118e sind radial nach außen gerichtet.

Der Gabelbogen 16e weist einen ersten Abschnitt 98e auf, der radial unterhalb einer ersten der Stufungen angeordnet ist. Der Gabelbogen 16e weist einen weiteren Abschnitt 100e auf, der radial zwischen der ersten Stufung und einer weiteren der Stufungen angeordnet ist. Der Gabelbogen 16e weist im Unterschied zu den vorangehenden Ausführungsbeispielen einen dritten Abschnitt 114e auf, der radial oberhalb der weiteren Stufung angeordnet ist. Der erste Abschnitt 98e ist in einer ersten Bogenebene 28e angeordnet. Der weitere Abschnitt 100e ist in einer weiteren Bogenebene 30e angeordnet. Der dritte Abschnitt 114e ist in einer dritten Bogenebene 32e angeordnet Die Bogenebenen 28e, 30e, 32e sind jeweils senkrecht zu der Verschieberichtung 70e angeordnet. Die Bogenebenen 28e, 30e, 32e sind axial versetzt zueinander angeordnet. Die dritte Bogenebene 32e ist in einer gleichen Richtung gegenüber der zweiten Bogenebene 30e versetzt wie die zweite Bogenebene 30e gegenüber der ersten Bogenebene 28e. Die Stufungen bildet jeweils einen Übergang zwischen den Abschnitten 98e, 100e, 114e. Die Stufungen sind radial jeweils zwischen zwei Abschnitten 98e, 100e, 114e angeordnet. Der erste Abschnitt 98e greift in einem montierten Zustand zumindest teilweise in die Nut der Schaltmuffe ein. Die erste Stufung weist eine Stufenhöhe 42e auf. Die zweite Stufung weist eine Stufenhöhe 120e auf. In dem vorliegenden Ausführungsbeispiel weisen die Stufungen eine gleiche Stufenhöhe 42e, 120e auf. Es ist denkbar, dass die Stufungen in einer alternativen Ausführung unterschiedliche Stufenhöhen aufweisen.

Figur 10 zeigt ein nicht unter den vorliegenden Anspruch 1 fallendes Ausführungsbeispiel einer Schaltgabel 10f zu einer Betätigung einer Schaltmuffe in einem Fahrzeuggetriebe mit einem Gabelbogen 16f, der die Schaltmuffe in einem montierten Zustand zumindest teilweise umgreift. Das Ausführungsbeispiel der Fig. 10 fällt nicht unter den Wortlaut des Anspruchs 1. Der Gabelbogen 16f weist an einem Innenumfang einen Rand auf, der in einem montierten Zustand in die Schaltmuffe eingreift. Der Gabelbogen 16f ist dazu vorgesehen, die Schaltmuffe bei einem Schaltvorgang in einer Verschieberichtung 70f zu bewegen. Der Gabelbogen 16f weist in einem Bereich 18f eine axiale Stufung auf. Der Gabelbogen 16f weist in einem weiteren Bereich 44f eine weitere axiale Stufung auf. Die Stufungen weisen entgegengesetzte axiale Richtungen auf. Die Stufungen sind radial versetzt zueinander angeordnet. Die Stufungen sind konzentrisch zueinander angeordnet. Die Bereiche 18f, 44f sind konzentrisch zueinander angeordnet. Die Bereiche 18f, 44f sind jeweils bogenförmig ausgebildet.

Der Gabelbogen 16f weist zumindest ein axiales Schnittprofil auf, das vier paarweise gleichgerichtete S-förmige Konturen 20f, 22f, 24f, 26f aufweist. Ein erstes der Paare von S-förmigen Konturen 20f, 22f ist der ersten Stufung zugeordnet. Ein zweites der Paare von S-förmigen Konturen 24f, 26f ist der zweiten Stufung zugeordnet. Die S-förmigen Konturen 20f, 22f, 24f, 26f unterschiedlicher Paare sind gegenläufig zueinander ausgebildet. Die S-förmigen Konturen 20f, 22f des ersten Paares sind zumindest im Wesentlichen parallel zueinander angeordnet. Die S-förmigen Konturen 24f, 26f des zweiten Paares sind zumindest im Wesentlichen parallel zueinander angeordnet. Der Gabelbogen 16f weist in dem vorliegenden Ausführungsbeispiel vier radial ausgerichtete Stufenflächen 94f, 96f, 116f, 118f auf. Eine erste der Stufenflächen 94f und eine zweite der Stufenflächen 116f sind radial nach innen gerichtet. Eine dritte der Stufenflächen 96f und eine vierte der Stufenflächen 118f sind radial nach außen gerichtet.

Der Gabelbogen 16f weist einen ersten Abschnitt 98f auf, der radial unterhalb einer ersten der Stufungen angeordnet ist. Der Gabelbogen 16f weist einen weiteren Abschnitt 100f auf, der radial zwischen der ersten Stufung und einer weiteren der Stufungen angeordnet ist. Der Gabelbogen 16f weist im Unterschied zu den vorangehenden Ausführungsbeispielen einen dritten Abschnitt 114f auf, der radial oberhalb der weiteren Stufung angeordnet ist. Der erste Abschnitt 98f ist in einer ersten Bogenebene 28f angeordnet. Der weitere Abschnitt 100f ist in einer weiteren Bogenebene 30f angeordnet. Der dritte Abschnitt 114f ist in einer dritten Bogenebene 32f angeordnet Die Bogenebenen 28f, 30f, 32f sind jeweils senkrecht zu der Verschieberichtung 70f angeordnet. Die Bogenebenen 28f, 30f, 32f sind axial versetzt zueinander angeordnet. Die dritte Bogenebene 32f ist in einer entgegensetzten Richtung gegenüber der zweiten Bogenebene 30f versetzt wie die zweite Bogenebene 30f gegenüber der ersten Bogenebene 28f. Die Stufungen bildet jeweils einen Übergang zwischen den Abschnitten 98f, 100f, 114f. Die Stufungen sind radial jeweils zwischen zwei Abschnitten 98f, 100f, 114f angeordnet. Der erste Abschnitt 98f greift in einem montierten Zustand zumindest teilweise in die Nut der Schaltmuffe ein.

### Bezugszeichenliste

- 10: Schaltgabel
- 12: Schaltmuffe
- 14: Fahrzeuggetriebe
- 16: Gabelbogen
- 18: Bereich
- 20: Kontur
- 22: Kontur
- 24: Kontur
- 26: Kontur
- 28: Bogenebene
- 30: Bogenebene
- 32: Bogenebene
- 34: Eingriffelement
- 36: Eingriffelement
- 38: Eingriffelement
- 40: Dicke
- 42: Stufenhöhe
- 44: Bereich
- 48: Antriebsstrang
- 50: Brennkraftmaschine
- 52: Antriebswelle
- 54: Innenumfang
- 56: Kupplungsvorrichtung
- 58: Differentialgetriebe
- 60: Antriebsrad
- 62: Antriebsrad
- 64: Antriebswellen
- 66: Antriebswellen
- 68: Steuer- und/oder Regeleinheit
- 70: Verschieberichtung
- 72: Drehachse
- 74: Mitnehmer
- 76: Führungsrohr
- 78: Achse
- 80: Führungsstab
- 82: Führungshülse
- 84: Nut
- 86: Seitenwand
- 88: Seitenwand
- 90: Stützelement
- 92: Stützelement
- 94: Stufenfläche
- 96: Stufenfläche
- 98: Abschnitt
- 100: Abschnitt
- 102: Schaltweg
- 104: Zahnrad
- 106: Zahnrad
- 108: Ring
- 110: Grundkörper
- 112: Eingriffbogen
- 114: Abschnitt
- 116: Stufenfläche
- 118: Stufenfläche
- 120: Stufenhöhe
- 122: radiale Richtung

## Patentansprüche

1. Fahrzeuggetriebe mit einem ersten Zahnrad (104a), einem weiteren Zahnrad (106a), einer Schaltmuffe (12a) und einer Schaltgabel (10a; 10b; 10c; 10d; 10e) zu einer Betätigung der Schaltmuffe (12a), mit einem Gabelbogen (16a; 16b; 16c; 16d; 16e), der die Schaltmuffe (12a) zumindest teilweise umgreift, wobei der Gabelbogen (16a; 16b; 16c; 16d; 16e) in zumindest einem Bereich (18a; 18b; 18c; 18d; 18e) eine, bezogen auf eine Richtung einer Drehachse der Schaltmuffe (12a), die mit einer Achse des Gabelbogens (16a; 16b; 16c; 16d; 16e) zusammenfällt, axiale Stufung aufweist,
wobei der Gabelbogen (16a; 16b; 16c; 16d; 16e) einen ersten Abschnitt (98a; 98b; 98c; 98d; 98e) und einen weiteren Abschnitt (100a; 100b; 100c; 100d; 100e) aufweist, die radial zueinander benachbart und, bezogen auf die Richtung der Drehachse der Schaltmuffe (12a), axial versetzt zueinander angeordnet sind,
wobei der erste Abschnitt (98a; 98b; 98c; 98d; 98e) bezogen auf die Drehachse der Schaltmuffe (12a) radial unterhalb der Stufung angeordnet ist, wobei der weitere Abschnitt (100a; 100b; 100c; 100d; 100e) radial oberhalb der Stufung angeordnet ist,
wobei die Stufung einen Übergang zwischen dem ersten Abschnitt (98a; 98b; 98c; 98d; 98e) und dem weiteren Abschnitt (100a; 100b; 100c; 100d; 100e) bildet und radial zwischen den beiden Abschnitten (98a; 98b; 98c; 98d; 98e; 100a; 100b; 100c; 100d; 100e) angeordnet ist,
wobei der erste Abschnitt (98a; 98b; 98c; 98d; 98e) zumindest teilweise in eine Nut (84a) der Schaltmuffe (12a) eingreift,
wobei die Nut (84a) zwei einander axial gegenüberliegende Seitenwände (86a; 88a) aufweist,
wobei die Schaltgabel (10a; 10b; 10c; 10d; 10e) dazu vorgesehen ist, die Schaltmuffe (12a) entlang eines Schaltwegs (102a) in einer Verschieberichtung (70a), die parallel zur Drehachse der Schaltmuffe (12a) angeordnet ist, zu bewegen,
**dadurch gekennzeichnet, dass**
die Schaltmuffe (12a) in einem ersten Schaltzustand in Eingriff mit dem ersten Zahnrad (104a) und in einem weiteren Schaltzustand in Eingriff mit dem weiteren Zahnrad (106a) ist, wobei die Schaltgabel (10a; 10b; 10c; 10d; 10e) und die Schaltmuffe (12a) in dem weiteren Schaltzustand eine Position aufweisen, die axial versetzt, bezogen auf die Richtung der Drehachse der Schaltmuffe (12), zu einer Position in dem ersten Schaltzustand angeordnet ist, wobei das erste Zahnrad (104a) an einem Außenumfang einen Ring (108a) aufweist, der in dem ersten Schaltzustand axial, bezogen auf die Richtung der Drehachse der Schaltmuffe (12), mit der Schaltmuffe (12a) überlappt, wobei in dem ersten Schaltzustand sowohl die Schaltmuffe (12a) axial teilweise in das erste Zahnrad (104a) eingreift als auch der erste Abschnitt (98a; 98b; 98c; 98d; 98e) des Gabelbogens (16a) teilweise in das erste Zahnrad (104a) eingreift,
wobei der zweite Abschnitt (100a; 100b; 100c; 100d; 100e) des Gabelbogens (16a) in axialer Richtung mit einer der beiden Seitenwände (86a) der Nut (84a) der Schaltmuffe (12a) überlappt, sodass die besagte Seitenwand (86a) der Nut (84a) in axialer Richtung in den Gabelbogen (16a; 16b; 16c; 16d; 16e) eingreift.

2. Fahrzeuggetriebe nach Anspruch 1,
**dadurch gekennzeichnet, dass**
der Gabelbogen (16a; 16b; 16c; 16d; 16e) zumindest ein axiales Schnittprofil aufweist, das zumindest zwei S-förmige Konturen (20a, 22a; 20b, 22b; 20c, 22c; 20d, 22d; 20e, 22e, 24e, 26e) aufweist, die zumindest im Wesentlichen parallel zueinander angeordnet sind, wobei das Schnittprofil durch einen Schnitt entlang einer Schnittebene entsteht, die die Drehachse der Schaltmuffe (12a) einschließt.

3. Fahrzeuggetriebe nach einem der vorhergehenden Ansprüche,
**gekennzeichnet durch**
zumindest ein in dem zumindest einen Bereich (18a; 18b; 18c; 18d; 18e) angeordnetes Eingriffelement (34a, 36a, 38a), das dazu vorgesehen ist, mit der Schaltmuffe (12a) zusammenzuwirken.

4. Fahrzeuggetriebe nach einem der vorhergehenden Ansprüche,
**dadurch gekennzeichnet, dass**
der Gabelbogen (16a; 16b; 16c; 16d, 16e) zumindest in dem Bereich (18a; 18b; 18c; 18d; 18e) der Stufung zumindest teilweise durchgesetzt, gezogen, geschmiedet oder gegossen ausgebildet ist.

## Claims

1. Vehicle gearbox with a first gear (104a), a further gear (106a), a clutch sleeve (12a) and a selector fork (10a; 10b; 10c; 10d; 10e) for an actuation of the clutch sleeve (12a), with a fork bow (16a; 16b; 16c; 16d; 16e), which at least partially encompasses the clutch sleeve (12a), wherein the fork bow (16a; 16b; 16c; 16d; 16e) has in at least one region (18a; 18b; 18c; 18d; 18e) an axial stepping with respect to a direction of an axis of rotation of the clutch sleeve (12a) coinciding with an axis of the fork bow (16a; 16b; 16c; 16d; 16e),
wherein the fork bow (16a; 16b; 16c; 16d; 16e) has a first section (98a; 98b; 98c; 98d; 98e) and a further section (100a; 100b; 100c; 100d; 100e) arranged radially adjacent to each other and axially offset against each other with respect to the direction of the axis of rotation of the clutch sleeve (12a),
wherein the first section (98a; 98b; 98c; 98d; 98e) is located radially below the stepping with respect to the axis of rotation of the clutch sleeve (12a), wherein the further section (100a; 100b; 100c; 100d; 100e) is located radially above the stepping,
wherein the stepping forms a transition between the first section (98a; 98b; 98c; 98d; 98e) and the further section (100a; 100b; 100c; 100d; 100e) is located radially between, the two sections (98a; 98b; 98c; 98d; 98e; 100a; 100b; 100c; 100d; 100e),
wherein the first section (98a; 98b; 98c; 98d; 98e) at least partially engages with a groove (84a) of the clutch sleeve (12a),
wherein the groove (84a) has two side walls (86a; 88a) located axially opposite each other,
wherein the selector fork (10a; 10b; 10c; 10d; 10e) is provided to move the clutch sleeve (12a) along a shifting path (102a) in a displacement direction (70a) oriented parallel to the axis of rotation of the clutch sleeve (12a),
**characterised in that**
the clutch sleeve (12a) is in engagement with the first gear (104a) in a first shifting state and in engagement with the second gear (106a) in a further shifting state, wherein the selector fork (10a; 10b; 10c; 10d; 10e) and the clutch sleeve (12a) have in the further shifting state a position that is axially offset against a position in the first shifting state with respect to the axis of rotation of the clutch sleeve (12a),
wherein the first gear (104a) has at an outer circumference a ring (108a) overlapping in the first shifting state the clutch sleeve (12a) axially with respect to the axis of rotation of the clutch sleeve (12a),
wherein in the first shifting state both the clutch sleeve (12a) axially engages partially with the first gear (104a) and the first section (98a; 98b; 98c; 98d; 98e) of the fork bow (16a) engages partially with the first gear (104a)
wherein the second section (100a; 100b; 100c; 100d; 100e) of the fork bow (16a) overlaps in the axial direction one of the two side walls (86a) of the groove (84a), so that said side wall (86a) of the groove (84a) engages with the fork bow (16a; 16b; 16c; 16d; 16e) in the axial direction.

2. Vehicle gearbox according to claim 1,
**characterised in that**
the fork bow (16a; 16b; 16c; 16d; 16e) has at least one axial sectional profile having at least two S-shaped contours (20a, 22a; 20b, 22b; 20c, 22c; 20d, 22d; 20e, 22e, 24e, 26e) arranged at least substantially parallel to one another, wherein the sectional profile is generated by a section along a sectional plane enclosing the axis of rotation of the clutch sleeve (12a).

3. Vehicle gearbox according to any of the preceding claims,
**characterised by**
at least one engagement element (34a, 36a, 38a), which is located in the at least one region (18a; 18b; 18c; 18d; 18e) and is provided to interact with the clutch sleeve (12a).

4. Vehicle gearbox according to any of the preceding claims,
**characterised in that**
the fork bow (16a; 16b; 16c; 16d; 16e) is designed to be at least partially pressed, drawn, forged or cast at least in the region (18a; 18b; 18c; 18d; 18e) of the stepping.

## Revendications

1. Boîte de vitesses de véhicule automobile comprenant un premier engrenage (104a), un second engrenage (106a), un manchon baladeur (12a) et une fourchette (10a, 10b, 10c, 10d, 10e) pour actionner le manchon baladeur (12a), un arc de fourchette (16a, 16b, 16c, 16d, 16e), qui entoure le manchon baladeur (12a) au moins à certains endroits, l'arc de fourchette (16a, 16b, 16c, 16d, 16e) comportant dans au moins une zone (18a, 18b, 18c, 18d, 18e) un étagement axial, par rapport à une direction d'un axe de rotation du manchon baladeur (12a), qui coïncide avec un axe de l'arc de fourchette (16a, 16b, 16c, 16d, 16e),
l'arc de fourchette (16a, 16b, 16c, 16d, 16e) comportant une première section (98a, 98b, 98c, 98d, 98e) et une seconde section (100a, 100b, 100c, 100d, 100e) qui sont adjacentes radialement et, par rapport à la direction de l'axe de rotation du manchon baladeur (12a), se déplacent axialement l'une par rapport à l'autre,
la première section (98a, 98b, 98c, 98d, 98e) par rapport à l'axe de rotation du manchon baladeur (12a) étant disposé radialement en dessous de l'étagement, l'autre section (100a, 100b, 100c, 100d, 100e) étant disposée radialement au-dessus de l'étagement,
l'étagement formant une transition entre la première section (98a, 98b, 98c, 98d, 98e) et l'autre section (100a, 100b, 100c, 100d, 100e) et étant disposé radialement entre les deux sections (98a, 98b, 98c, 98d, 98e, 100a, 100b, 100c, 100d, 100e),
la première section (98a, 98b, 98c, 98d, 98e) s'insérant au moins à certains endroits dans une rainure (84a) du manchon baladeur (12a),
la rainure (84a) comportant deux parois latérales (86a, 88a) disposées axialement en regard l'une de l'autre,
la fourchette (10a, 10b, 10c, 10d, 10e) servant à déplacer le manchon baladeur (12a) le long d'une ligne de sélection (102a) dans une direction de déplacement (70a) qui est parallèle à l'axe de rotation du manchon baladeur (12a),
**caractérisée en ce que**
le manchon baladeur (12a) dans un premier état de sélection s'engrène dans le premier engrenage (104a) et dans un autre état de sélection s'engrène avec l'autre engrenage (106a), la fourchette (10a, 10b, 10c, 10d, 10e) et le manchon baladeur (12a) présentant dans l'autre état de sélection une position qui est axialement déplacée, par rapport à la direction de l'axe de rotation du manchon baladeur (12), vers une position dans le premier état de sélection, le premier engrenage (104a) comportant sur une périphérie extérieure une bague (108a) qui chevauche dans le premier état de sélection axialement, par rapport à la direction de l'axe de rotation du manchon baladeur (12), le manchon baladeur (12a), dans le premier état de sélection, le manchon baladeur (12a) s'engrène axialement en partie dans le premier engrenage (104a) et la première section (98a, 98b, 98c, 98d, 98e) de l'arc de fourchette (16a) s'engrène en partie dans le premier engrenage (104a),
la seconde section (100a, 100b, 100c, 100d, 100e) de l'arc de fourchette (16a) chevauchant dans la direction axiale avec l'une des deux parois latérale (86a) de la rainure (84a) le manchon baladeur (12a) de sorte que ladite paroi latérale (86a) de la rainure (84a) s'engrène dans la direction axiale dans l'arc de fourchette (16a, 16b, 16c, 16d, 16e).

2. Boîte de vitesses de véhicule automobile selon la revendication 1, **caractérisée en ce que** l'arc de fourchette (16a, 16b, 16c, 16d, 16e) comporte au moins un profilé de découpe axiale qui présente au moins deux contours en forme de S (20a, 22a, 22b, 20c, 22c, 20d, 22d, 20e, 22e, 24e, 26e) qui sont au moins sensiblement parallèle l'un avec l'autre, le profilé de découpe se formant par une découpe le long d'un plan de découpe qui renferme l'axe de rotation du manchon baladeur (12a).

3. Boîte de vitesses de véhicule automobile selon l'une quelconque des revendications précédentes, **caractérisée par** au moins un élément d'engrènement (34a, 36a, 38a) disposé dans ladite zone (18a, 18b, 18c, 18d, 18e), qui sert à coopérer avec le manchon baladeur (12a).

4. Boîte de vitesses de véhicule automobile selon l'une quelconque des revendications précédentes, **caractérisée en ce que** l'arc de fourchette (16a, 16b, 16c, 16d, 16e) est au moins en partie moulé ou forgé dans la zone (18a, 18b, 18c, 18d, 18e) de l'étagement.
